# EUROPEAN PATENT APPLICATION

(11) **EP 2 503 624 A1**
(43) Date of publication of application: **26.09.2012**
(21) Application number: 12160973.9
(22) Date of filing: 23.03.2012
(51) Int. Cl.: H01M 2/10, H01M 6/46, H01M 6/50, H01M 10/42, H01M 6/18, H01M 10/052, H01M 10/0565

(54) **Wearable battery set**

(30) Priority: 25.03.2011 TW 100110261
(71) Applicant: Tex-Ray Industrial Co., Ltd., Taipei City (TW)
(72) Inventor: HUANG, Hong-Hsu, Taipei City (TW); PENG, Jung-Hsiang, Taipei City (TW)
(74) Representative: von Kreisler Selting Werner

(57) **Abstract**

A wearable battery set is provided. The wearable battery set comprises a buckle and a flexible battery unit. The buckle has a control circuit. The flexible battery is disposed on the side of the buckle and connects to the control circuit electrically. The flexible battery unit is adapted to be bent into a ring, and the buckle is configured to keep the flexible battery unit in the ring form so that the wearable battery set can be worn by a user. The control circuit of the buckle is configured to control the output power of the flexible battery unit so that the wearable battery set is able to provide the output power to an electronic device via the control circuit of the buckle.

## Description

This application claims priority to Taiwan Patent Application No. 100110261 filed on March 25, 2011, which is hereby incorporated by reference in its entirety.

### CROSS-REFERENCES TO RELATED APPLICATION

Not applicable.

### BACKGROUND OF THE INVENTION

### Field of the Invention

The present invention relates to a wearable battery set. In particular, the wearable battery set of the present invention can be worn by a user and supply power to an electronic device.

### Descriptions of the Related Art

With the continuous advancement of science and technology, various kinds of portable electronic apparatuses have been developed, and this brings great convenience to peoples' lives. Because good portability is of a great concern in the use of modem portable electronic apparatuses, they must be made to particularly have a small volume. In other words, in consideration of good portability, portable electronic apparatuses have become increasingly smaller; and correspondingly, batteries used therein must also be decreased in volume. Unfortunately, as batteries are decreased in volume, the power capacity they can provide will be greatly restricted.

Consequently, the battery will run out of power more frequently during the use of a portable electronic apparatus. This not only makes it impossible for the user to continue to use the portable electronic apparatus, but may also lead to loss of data during editing if the user fails to save the data when the battery runs out of power. The usual practice to solve this problem is to carry a backup battery about so that when the original battery of the portable electronic apparatus is running out of power, it can be replaced by the backup battery to ensure the normal use of portable electronic apparatus and the accuracy of the data stored. However, although the use of the backup battery can solve the problem of running out of power, carrying the backup battery is inconvenient to the user; moreover, the loss of the backup battery would incur a loss to the user.

Accordingly, an urgent need exists in the art to provide a solution that can obviate the inconveniences of carrying a backup battery and solve the problem of insufficient power capacity of electronic apparatuses.

### SUMMARY OF THE INVENTION

To solve the aforesaid problem, a wearable battery set is provided in the present invention. The wearable battery set comprises a buckle and a flexible battery unit. The buckle comprises a control circuit. The flexible battery unit is disposed on a side of the buckle and connected to the control circuit electrically. The flexible battery unit is adapted to be bent into a ring form, and the buckle is configured to keep the flexible battery unit in the ring form so that the wearable battery set can be worn by a user. The control circuit is configured to control an output power of the flexible battery unit so that the wearable battery set is capable of providing the output power to an electronic device via the control circuit of the buckle.

Because the flexible battery unit of the wearable battery set of the present invention has flexibility and the buckle is adapted to keep the flexible battery unit in the ring form, the wearable battery set of the present invention can be easily worn by a user. Meanwhile, the control circuit of the buckle can control output of the power of the flexible battery unit to the electronic device for use by the electronic device. Thereby, the wearable battery set of the present invention not only solves the problem of insufficient power capacity of electronic apparatuses, but also obviates the inconvenience of carrying a backup battery.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** is a schematic view of a wearable battery set according to a first embodiment of the present invention;
**FIG. 2** is a schematic view of a flexible battery unit according to the first embodiment of the present invention in a bent status;
**FIG. 3** is a schematic view of a wearable battery set according to a second embodiment of the present invention;
**FIG. 4** is a schematic view of a wearable battery set according to a third embodiment of the present invention; and
**FIG. 5** is a schematic view of a flexible battery unit according to the third embodiment of the present invention in a bent status.

### DESCRIPTION OF THE PREFERRED EMBODIMENT

In the following description, the present invention will be explained with reference to embodiments thereof. However, these embodiments are not intended to limit the present invention to any specific environment, applications or particular implementations described in these embodiments. Therefore, the description of these embodiments is only for the purpose of illustration rather than to limit the present invention. It should be appreciated that in the following embodiments and the attached drawings, elements unrelated to the present invention are omitted from depiction.

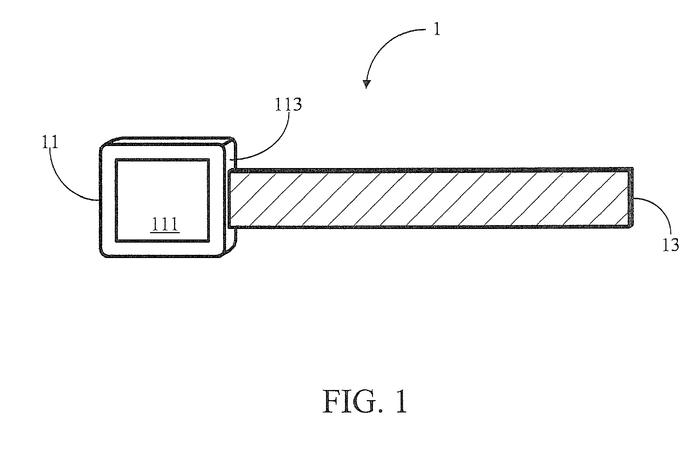

**FIG. 1** illustrates a schematic view of a wearable battery set **1** according to a first embodiment of the present invention. The wearable battery set **1** comprises a buckle **11** and a flexible battery unit **13.** The buckle **11** comprises a control circuit **111.** The flexible battery unit **13** is disposed on a side **113** of the buckle **11** and connected to the control circuit **111** within the buckle **11** electrically.

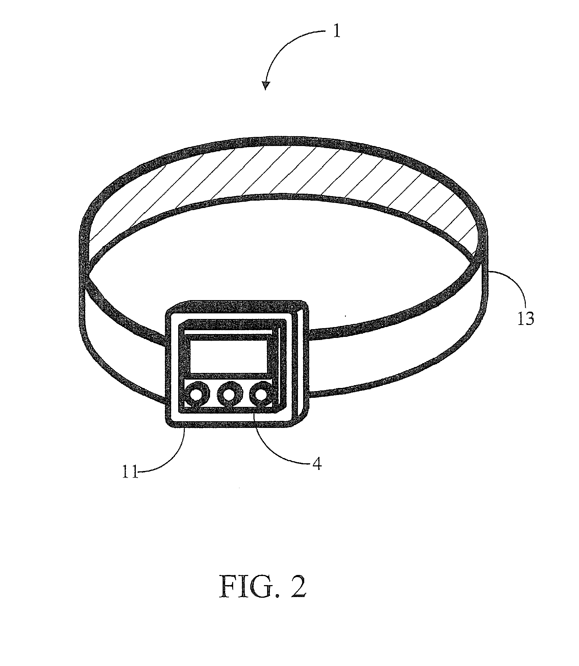

**FIG. 2** illustrates a schematic view of the flexible battery unit **13** of the present invention in a bent status. As shown, the flexible battery unit **13** is adapted to be bent into a ring form, and the buckle **11** is adapted to keep the flexible battery unit **13** in the ring form so that the wearable battery set **1** can be worn by a user. It shall be particularly emphasized that in the first embodiment, the wearable battery set **1** is implemented as a belt so that it can be worn around the user's waist. However, this is not intended to limit the implementations of the wearable battery set **1;** and in other embodiments, the wearable battery set **1** may also be implemented as a wristlet, an armlet, a bracing or some other wearable element that can be attached to the user's body.

Furthermore, the buckle **11** has an electronic device **4** disposed thereon, which is electrically connected to the control circuit **111.** Thus, through the aforesaid connections, the control circuit **111** of the buckle **11** can control an output power of the flexible battery unit **13,** and supply the output power to the electronic device **4** so that the electronic device **4** can operate on the power output from the flexible battery unit **13.** Furthermore, the control circuit **111** comprises a variable resistor. Through the connection in series with the variable resistor, the control circuit **111** is able to control a voltage and a current output from the flexible battery unit **13** so that the user can operate the electronic device **4.**

It shall be particularly appreciated that in the first embodiment, the electronic device **4** is disposed on the buckle **11** and may be a Global Positioning System (GPS), an MP3 player or some other kind of electronic product. However, this is not intended to limit the kind and location of the electronic device **4;** and in other embodiments, the electronic device **4** may be a common electronic device and may be disposed in different ways depending on the practical application.

Furthermore, the flexible battery unit **13** may be either an independent flexible battery (e.g., a thin-film battery, a lithium battery) or a combination of a flexible battery (e.g., a thin-film battery, a lithium battery) and a flexible element (e.g., leather), both of which are intended to make the flexible battery unit **13** flexible and bendable so that the wearable battery set **1** can be worn by the user. However, this is not intended to limit implementations of the flexible battery unit **13.**

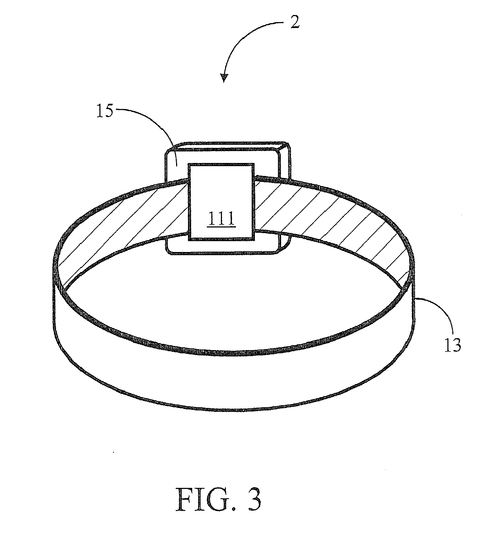

**FIG. 3** illustrates a schematic view of a wearable battery set **2** according to a second embodiment of the present invention. It shall be appreciated firstly that the components and operation principles of the wearable battery set **2** of the second embodiment are substantially the same as those of the first embodiment, so like components will be denoted still by like reference numerals, and functions and details thereof will not be described again herein. The second embodiment differs from the first embodiment mainly in that the flexible battery unit **13** of the second embodiment is disposed on the other side **15** of the buckle **11.** In other words, the method in which the buckle and the flexible battery unit are joined together is not limited in the wearable battery set of the present invention, but may vary depending on the user's needs.

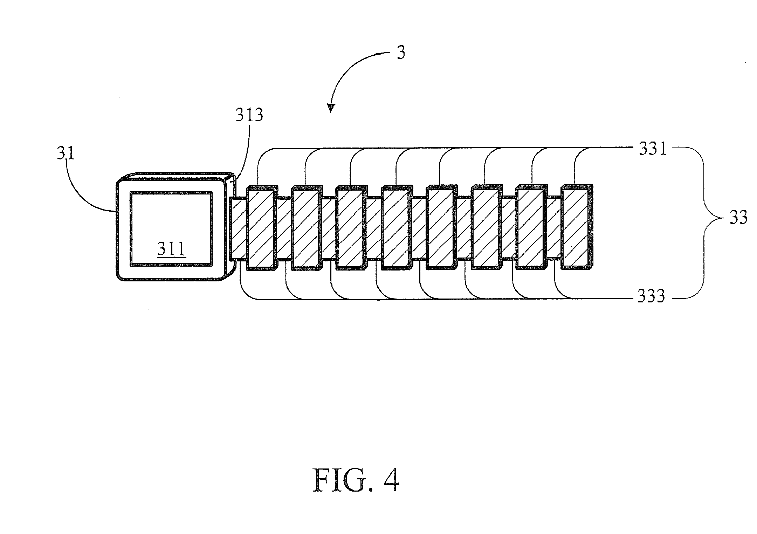

**FIG. 4** illustrates a schematic view of a wearable battery set **3** according to a third embodiment of the present invention. The wearable battery set **3** comprises a buckle **31** and a flexible battery unit **33.** The buckle **31** comprises a control circuit **311.** The flexible battery unit **33** is disposed on a side **313** of the buckle **31** and is connected to the control circuit **311** electrically.

In the third embodiment, the flexible battery unit **33** may be provided with the flexibility through the interconnection of individual elements. Specifically, the flexible battery unit **33** comprises a plurality of battery sub-units **331** and a plurality of connecting elements **333.** The connecting elements **333** are flexible circuit elements, which are disposed between the battery sub-units **331** respectively to connect the battery sub-units **331** physically and electrically.

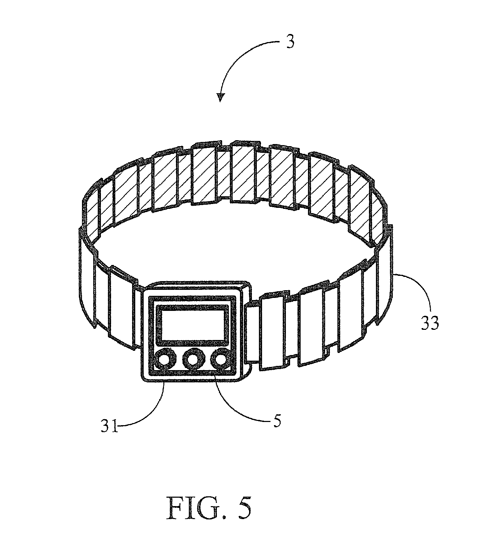

**FIG. 5** illustrates a schematic view of the flexible battery unit **33** of the present invention in a bent status. Likewise, as shown, the flexible battery unit **33** is adapted to be bent into a ring form, and the buckle **31** is adapted to keep the flexible battery unit **33** in the ring form so that it can be worn by the user. It shall be particularly appreciated that the flexible battery unit **33** is formed of a plurality of battery sub-units **331** and a plurality of connecting elements **333** in combination with the third embodiment, so even when the battery sub-units 331 are inflexible, the flexible battery unit **33** as a whole is still flexible as long as the connecting elements **333** are flexible.

Similarly, the buckle **31** has an electronic device 5 disposed thereon, which is connected to the control circuit **311** electrically. Thus, through the aforesaid connections, the control circuit **311** of the buckle **31** can control an output power of the flexible battery unit **33,** and supply the output power to the electronic device **5.**

According to the above descriptions, the wearable battery set of the present invention can supply power to various electronic devices, and by virtue of its flexibility, can be worn by the user in various ways to obviate the inconveniences of carrying a backup battery. Thereby, the wearable battery set of the present invention allows the user to use various portable electronic devices more conveniently.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A wearable battery set, comprising:
a buckle with a control circuit; and
a flexible battery unit, being disposed on a side of the buckle and connecting to the control circuit electrically;
wherein the flexible battery unit is adapted to be bent into a ring form, the buckle is configured to keep the flexible battery unit in the ring form so that the wearable battery set can be worn by a user, the control circuit is configured to control an output power of the flexible battery unit so that the wearable battery set is capable of providing the output power to an electronic device via the control circuit of the buckle.

2. The wearable battery set of claim 1, wherein the control circuit is further configured to control a voltage and a current output from the flexible battery unit.

3. The wearable battery set of claim 1 or 2, wherein the flexible battery unit comprises one of a thin film battery and a lithium battery.

4. The wearable battery set of one of claims 1 - 3, wherein the electronic device is disposed on the buckle and connects to the control circuit electrically, and the control circuit provides the output power to the electronic device so that the electronic device operates.

5. The wearable battery set of one of claims 1- 4, wherein the flexible battery unit further comprises:
a plurality of battery sub-units; and
a plurality of connecting elements;
wherein the plurality of connecting elements are disposed between the plurality of battery sub-units and are used for connecting the plurality of battery sub-units physically and electrically.
